# EUROPEAN PATENT APPLICATION

(11) **EP 3 190 443 A1**
(43) Date of publication of application: **12.07.2017**
(21) Application number: 15838610.2
(22) Date of filing: 07.07.2015
(51) Int. Cl.: G02B 21/06, G01J 3/14, G01J 3/51, G01N 21/27

(54) **MICROSCOPE**

(30) Priority: 05.09.2014 JP 2014181303
(71) Applicant: Sumitomo Electric Industries, Ltd., Osaka-shi, Osaka 541-0041 (JP)
(72) Inventor: OKUNO, Takuya, Yokohama-shi Kanagawa 244-8588 (JP); MOTOMURA, Asako, Yokohama-shi Kanagawa 244-8588 (JP); SOGAWA, Ichiro, Yokohama-shi Kanagawa 244-8588 (JP); SUGANUMA, Hiroshi, Yokohama-shi Kanagawa 244-8588 (JP)
(74) Representative: Hoffmann Eitle
(86) International application number: PCT/JP2015/069534
(87) International publication number: WO 2016/035444

(57) **Abstract**

A microscope that makes it possible to acquire a hyperspectral image with high data precision includes a light source, an illumination optical system, an image-forming optical system, an imaging unit, a spectroscope, a stage, a drive unit, and a control unit. The illumination optical system converges, at a converging angle θ, illuminating light in a wavelength band included in the near-infrared region output from the light source, and emits the converged illuminating light onto the object being observed. The image-forming optical system forms an image based on transmitted and scattered light generated by the observed object by emission of the illuminating light onto the observed object. The sin θ is set to a value that does not exceed the numerical aperture of an objective lens that receives the transmitted and scattered light from the observed object.

## Description

### Technical Field

The present invention relates to a microscope.

### Background Art

To observe an object, illuminating light output from a light source is emitted onto the object by an illumination optical system, an image of the object is formed by an image-forming optical system including an objective lens that receives transmitted and scattered light generated by the object, and the image is acquired by an imaging unit to enable observation based on the acquired image (see JP H10-20198A).

In particular, if the object being observed is a living tissue (cell), a cell is transparent in the visible region, and thus illuminating light in the near-infrared region can be suitably used (see JP H10-20198A and JP 2012-98181A). It is also possible to acquire a hyperspectral image having the spectral information of transmitted and scattered light generated at various positions in the object, and analyze the object based on this hyperspectral image (see JP 2012-98181A). Further, it is possible to perform background measurement with no observed object placed to determine the overall wavelength dependence including the output spectrum of the light source, the transmission spectra of the illumination and image-forming optical systems, and the sensitivity spectrum of the imaging unit, and correct the spectral information of various positions in the hyperspectral image of the object based on the determined wavelength dependence.

### Summary of Invention

### Technical Problem

It is an object of the present invention to provide a microscope that makes it possible to obtain a hyperspectral image with high data precision while reducing thermal damage to the object being observed.

### Solution to Problem

A microscope according to the present invention includes (1) a light source configured to output illuminating light in a wavelength band included in a near-infrared region, (2) an illumination optical system configured to converge the illuminating light at a converging angle θ and to emit the illuminating light onto an observed object, (3) an image-forming optical system including an objective lens having a numerical aperture equal to or greater than the sine of the converging angle θ, the objective lens being configured to receive transmitted and scattered light generated by the observed object by emission of the illuminating light onto the observed object, and the image-forming optical system being configured to form an image based on the transmitted and scattered light received by the objective lens, (4) an imaging unit configured to acquire the image, (5) a spectroscopic unit located between the light source and the imaging unit and configured to disperse the illuminating light or the transmitted and scattered light into a plurality of wavelength components, and (6) a calculating unit configured, based on the image, to calculate the intensities of a plurality of wavelength components of the transmitted and scattered light generated at a plurality of positions in the observed object.

A microscope according to another aspect of the present invention includes (1) a light source configured to output illuminating light in a wavelength band included in a near-infrared region, (2) an illumination optical system configured to converge the illuminating light and to emit the illuminating light onto an observed object, (3) an image-forming optical system including an objective lens configured to receive transmitted and scattered light generated by the observed object by emission of the illuminating light onto the observed object, the image-forming optical system having, at the focal position of the objective lens, a width of field of view equal to or greater than the beam diameter of the illuminating light output by the illumination optical system, the image-forming optical system being configured to form an image based on the transmitted and scattered light received by the objective lens, (4) an imaging unit configured to acquire the image, (5) a spectroscopic unit located between the light source and the imaging unit and configured to disperse the illuminating light or the transmitted and scattered light into a plurality of wavelength components, and (6) a calculating unit configure, based on the image, to calculate the intensities of a plurality of wavelength components of the transmitted and scattered light generated at a plurality of positions in the observed object. As used herein, the term "near-infrared region" refers to a wavelength range of 0.7 µm to 2.5 µm. In this regard, let E be the irradiance of illuminating light in one plane perpendicular to the optical axis of the illumination optical system, and Emax be its maximum value, the diameter of a circle circumscribing an area in the plane where E/Emax is equal to or greater than 0.1 is defined as the "beam diameter of illuminating light" in the plane.

In the microscope according to the present invention, the illumination optical system may emit the illuminating light onto the observed object from above the observed object, and the objective lens may be disposed below the observed object. The illumination optical system may be configured to increase the amount of the illuminating light during observation of the observed object relative to the amount of the illuminating light during background measurement, the illuminating light illuminating the observed object during the observation, and the calculating unit may include a storage device configured to store correction data used to correct the difference in the spectrum of the illuminating light between during observation and during background measurement, and may be configured to correct the intensities of the wavelength components based on the correction data. The light source or the illumination optical system may be configured to selectively emit the illuminating light onto the observed object during the exposure period of the imaging unit.

The illumination optical system may include a cylindrical lens that converges the illuminating light onto an area of the object that is elongated in a specific direction, or a slit to restrict an area of the observed object illuminated with the illuminating light to an area elongated in a specific direction, the spectroscopic unit may be configured to disperse the transmitted and scattered light in a direction perpendicular to the specific direction, and the imaging unit may be configured to acquire the intensities of a plurality of wavelength components of the transmitted and scattered light generated at a plurality of positions in the observed object along the specific direction. The illumination optical system may be configured to selectively emit the illuminating light onto the object in a wavelength band to which the imaging unit has sensitivity.

### Advantageous Effects of Invention

The present invention makes it possible to obtain a hyperspectral image with high data precision.

### Brief Description of Drawings

Figure 1 is a conceptual diagram of a microscope apparatus according to a first embodiment.
Figure 2 is a conceptual diagram of a microscope apparatus according to a second embodiment.
Figure 3 is a conceptual diagram of a microscope apparatus according to a third embodiment.
Figure 4 is a conceptual diagram illustrating a light converging angle θ of an illumination optical system.
Figure 5 is a conceptual diagram of a container used for observing an object with the object being immersed in a culture solution.

### Description of Embodiments

Embodiments of the present invention will be described below in detail with reference to the attached drawings. In the following description of the drawings, same elements are denoted by the identical reference signs to avoid repetitive description. It is intended that the present invention is not limited to these illustrated embodiments but defined by the claims, and encompasses all modifications and variations equivalent in meaning and scope to the claims.

Consider a case in which illuminating light is emitted as parallel light onto the object being observed to obtain an image of the object. In this case, the intensity of the transmitted and scattered light that reaches an imaging unit from the observed object decreases during observation of the object relative to that during background measurement, resulting in reduced data precision of the image of the object. In the case of obtaining a hyperspectral image of an object, in particular, the intensities of various wavelength components of the transmitted and scattered light generated at various positions in the object decrease even further, which further reduces the data precision of the resulting hyperspectral image.

A conceivable solution to this problem would be to converge illuminating light at a converging angle θ onto the object by use of the illumination optical system during observation of the object. This configuration increases the intensities of various wavelength components of the transmitted and scattered light generated at various positions in the object, and is thus expected to greatly improve the data precision of the resulting hyperspectral image. However, the following problem occurs if the sinθ exceeds the numerical aperture of the objective lens. Generally, a lens used to converge light is provided with a coating such as an anti-reflective coating. Since a different angle of incidence on the anti-reflective coating results in a different wavelength dependence of the anti-reflection effect, the spectrum of converged illuminating light depends on the light converging angle. The greater the light converging angle, the greater the resulting difference in spectrum. Thus, if illuminating light illuminates a scatterer at a converging angle exceeding the numerical aperture of the objective lens, then illuminating light with a spectrum different from that during background measurement is transmitted and measured through the specimen. This can often hinder improvement in the data precision of the resulting image.

If illuminating light is converged and emitted onto an object by the illumination optical system during observation of the object, this increases the density of illuminating light, which represents the amount of illuminating light applied per unit area of the object, thus enabling an improvement in measurement accuracy. At this time, increasing the magnification of observation causes the density of light reaching the imaging device to decrease in inverse proportion to the square of the magnification, resulting in a corresponding decrease in measurement accuracy. If the output of the illuminating light source is increased in an attempt to maintain measurement accuracy when observation at higher magnifications is required, such as during cell observation, this causes the observation object to be exposed to intense illuminating light for an extended period of time, resulting in significant thermal damage to the object.

### First Embodiment

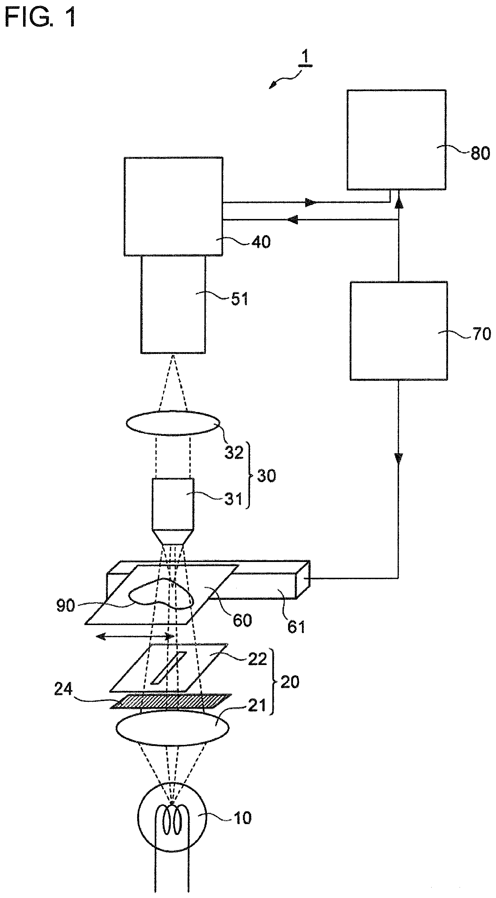

Figure 1 is a conceptual diagram of a microscope 1 according to a first embodiment. An observed object (object) 90, which is an object to be observed with the microscope 1, is a cell, for example. The object 90 is put in a container together with a culture solution, and placed on a stage 60.

A light source 10 outputs illuminating light in a wavelength band included in the near-infrared region. The light source 10 used preferably has output intensity over a board band. Preferred examples of the light source 10 include a halogen lamp, a xenon lamp, and a supercontinuum light source (SC light source).

An illumination optical system 20 converges the light output from the light source 10 onto the object 90. The illumination optical system 20 includes a condenser lens 21 and a slit 22. The condenser lens 21 converges the illuminating light output from the light source 10, and directs the converged illuminating light into the slit 22. The slit 22 has an opening elongated in a specific direction. The slit 22 is used to direct a portion of the illuminating light from the condenser lens 21 that passes through the opening onto the object 90. This configuration allows the illumination optical system 20 to emit illuminating light onto an area of the object 90 that is elongated in a specific direction.

The illumination optical system 20 is preferably designed so that the converging position of light is not located in the object 90 but above or below the object 90 in order to prevent the shape of the light source 10 or other features from being reflected in the imaging unit 40. More preferably, the converging position of the illuminating light is located on the same side as the light source 10 with respect to the object 90, as this minimizes a decrease in the amount of illuminating light illuminating the object 90 in comparison to that during background measurement.

An image-forming optical system 30 forms an image based on the transmitted and scattered light generated by the object 90 by the emission of illuminating light onto the object 90. The image-forming optical system 30 includes an objective lens 31 and an imaging lens 32. The objective lens 31 receives the transmitted and scattered light generated by the object 90 by the emission of illuminating light onto the object 90. The imaging lens 32 acts in conjunction with the objective lens 31 to form an image based on the transmitted and scattered light received by the objective lens 31. Since the slit 22 has an opening that is elongated in a specific direction, the image formed by the image-forming optical system 30 is also elongated in the specific direction.

A spectroscope 51 receives the image elongated in a specific direction that is formed by the image-forming optical system 30, and disperses the transmitted and scattered light in a direction perpendicular to the specific direction. The spectroscope 51 includes a spectroscopic element such as a prism or a grism.

An imaging unit 40 acquires the intensities of various wavelength components of transmitted and scattered light generated at various positions along the specific direction in the object 90. The imaging unit 40 may be any camera or other devices with sensitivity in the near-infrared band. A preferred example of the imaging unit 40 is a camera with a two-dimensional element such as InGaAs or HgCdTe. The image acquired by the imaging unit 40 indicates a position on the object 90 with respect to the specific direction, and indicates wavelength with respect to a direction perpendicular to the specific direction.

The stage 60 is a component on which a container containing a cell, which is the object 90, and a culture solution is placed. The stage 60 is driven by a drive unit 61, and movable in two directions perpendicular to the optical axis of the objective lens 31. The stage 60 is also movable in a direction parallel to the optical axis of the objective lens 31.

A control unit 70 controls how the drive unit 61 moves the stage 60, and controls how the imaging unit 40 acquires an image. In particular, the control unit 70 causes the stage 60 to move in a direction perpendicular to both the optical axis of the objective lens 31 and the specific direction mentioned above, and also causes the imaging unit 40 to acquire images at various positions as the stage 60 is moved.

A calculating unit 80 calculates the intensities of various wavelength components based on the image acquired by the imaging unit 40, the positional information obtained by the control unit 70, and the wavelength information of a spectroscopic instrument acquired in advance. As a result, a hyperspectral image of the object 90 can be acquired. Further, the calculating unit 80 may include a storage device to store correction data. This enables various kinds of corrections, for example, correction of the difference in the spectrum of illuminating light between during observation and during background measurement.

The light source 10 or the illumination optical system 20 preferably includes a shutter to selectively allow and block passage of illuminating light to the object 90. The light source 10 or the illumination optical system 20 also preferably includes an ND filter to regulate the amount of illuminating light illuminating the object 90. The control unit 70 adjusts the shutter or the ND filter to control the emission of illuminating light with the illumination optical system 20. In another preferred configuration, the control unit 70 synchronizes the opening and closing action of the shutter with the imaging action of the imaging unit 40 so that illuminating light selectively illuminates the object 90 during the exposure period of the imaging unit 40.

If illuminating light is converged and emitted onto the object 90 by the illumination optical system 20 during observation of an object, the intensities of the wavelength components of transmitted and scattered light generated at various positions in the object 90 increase. Thus, this configuration is expected to greatly improve the data precision of the resulting hyperspectral image. Further, the area in the focal plane of the objective lens that is illuminated with illuminating light preferably has a maximum length not greater than five times the width of field of view as this ensures less thermal damage to the specimen. However, if the converging angle at which the illumination optical system 20 illuminates the object 90 with illuminating light is too large, this causes the distance between the illumination optical system 20 and the object 90 to decrease, resulting in increased risk of physical interference between the illumination optical system 20 and the container. This also causes a large amount of spectral information of the container or culture solution to be contained in the spectral information of the resulting hyperspectral image.

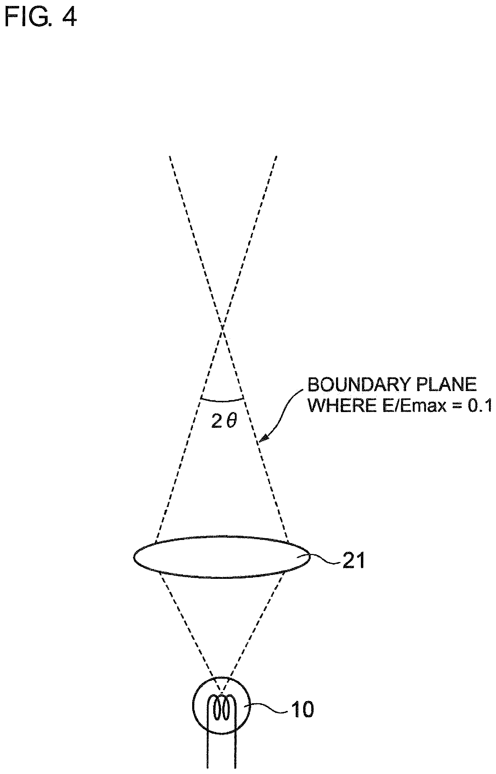

Accordingly, in the first embodiment, the sinθ, where θ is the converging angle at which the illumination optical system 20 illuminates the object 90 with illuminating light, is set to a value that does not exceed the numerical aperture of the objective lens 31. This configuration prevents an amount of illuminating light exceeding the numerical aperture of the objective lens, which does not enter the imaging unit during background measurement, from being scattered within the specimen and entering the imaging unit to mix into the measurement data. This allows a hyperspectral image with high data precision to be obtained. As illustrated in Figure 4, let E be the radiant intensity of illuminating light in one plane perpendicular to the optical axis of the illumination optical system, and Emax be its maximum value, the converging angle θ is defined as 1/2 of the angle at which the bundle of rays passing through an area in the plane where E/Emax is equal to or greater than 0.1 converges.

To acquire a hyperspectral image by use of the transmission arrangement in related art, during background measurement, the measurement is performed with a gap left or with only the container placed. The amount of light received in this case thus increases relative to the amount of light received during observation. This makes it impossible to perform appropriately setting of values such as dynamic range and the amount of illuminating light for specimen measurement. A simple solution would be to change the output of the light source 10 between during background measurement and during specimen observation. However, this may also cause the light source spectrum to be altered.

Accordingly, in a preferred implementation of the first embodiment, the amount of light illuminating the object 90 from the illumination optical system 20 during observation of the object 90 is increased relative to that during background measurement without changing the output of the light source 10, thus correcting the difference in the spectrum of illuminating light between during observation and during background measurement. Specifically, this is performed as follows. An ND filter with as little wavelength characteristics as possible is used to measure the transmission wavelength characteristics of the ND filter in advance, and the resulting transmission spectrum data is registered. At the same time, the difference in the amount of illuminating light and illuminating light spectrum between during background measurement and during specimen observation is corrected. If an ND filter is not used, data on spectral variations with changes in the output of the light source 10 is acquired in advance, and this spectrum data is registered. At the same time, the difference in the amount of illuminating light and illuminating light spectrum between during background measurement and during specimen observation is corrected.

In the first embodiment, the illumination optical system 20 preferably directs illuminating light by use of the slit 22 onto an area of the object 90 that is elongated in a specific direction. Directing illuminating light onto only a limited area of the object 90 in this way allows for reduced thermal damage to the object 90. For example, suppose that the sinα, where α is the converging angle of illuminating light with respect to the longitudinal direction (specific direction) of the opening of the slit 22, is 0.1, the sinβ, where β is the converging angle of illuminating light with respect to the width direction perpendicular to the specific direction of the slit 22, is 0.02, and the NA of the objective lens 31 is 0.15. In this case, although the illuminating light is not reduced by the slit 22, the area of the object 90 illuminated with the illuminating light is generally restricted to about 1/5. This means that if measurement is performed while scanning the object 90, thermal damage to the object 90 can be also generally reduced to about 1/5.

In the first embodiment, the illumination optical system 20 preferably emits illuminating light onto the object 90 selectively during the exposure period of the imaging unit 40. Specifically, the illumination optical system 20 preferably includes means for shutting off illuminating light at high speed, such as opening/closing of a shutter or rotation of a polarizing plate, or a light source capable of being turned ON/OFF in short time, such as an LED. In this way, the object 90 is not illuminated with illuminating light at times other than the exposure period of the imaging unit 40, and is illuminated with illuminating light only while imaging is performed. This makes it possible to reduce thermal damage to the object 90.

In a preferred implementation of the first embodiment, the illumination optical system 20 selectively emits illuminating light onto the object 90 in a wavelength band to which the imaging unit 40 has sensitivity, by use of a wavelength filter 24. This ensures that the object 90 is not irradiated with light in a band of wavelengths not contributing to observation, thus allowing for reduced thermal damage to the object 90.

### Second Embodiment

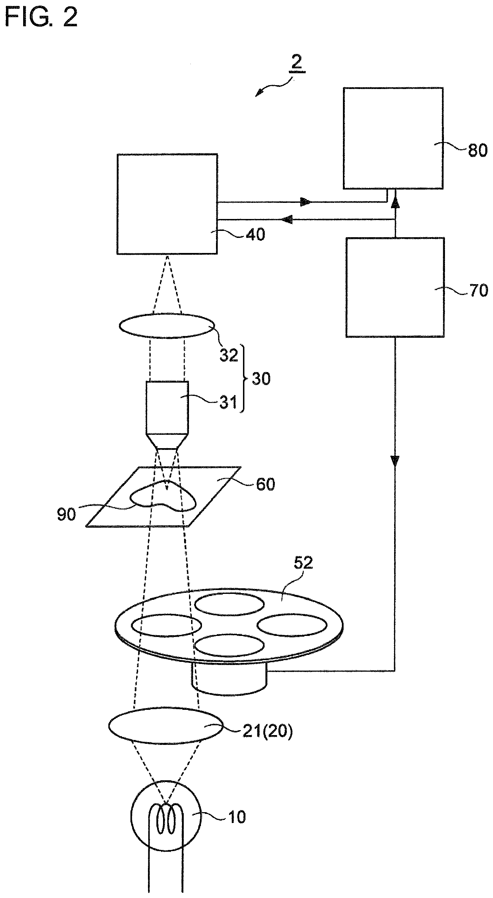

Figure 2 is a conceptual diagram of a microscope 2 according to a second embodiment. The microscope 2 differs from the microscope 1 in the following respects: the microscope 2 includes a spectral filter 52 instead of the spectroscope 51, and the illumination optical system 20 does not include the slit 22.

The spectral filter 52 is placed in the optical path between the condenser lens 21 and the object 90. The spectral filter 52 sequentially passes selected wavelength components of the illuminating light output from the light source 10, and directs the selected wavelength components of the illuminating light onto the object 90. An acoustooptic element filter or other filters may be used instead of a spectral filter.

The control unit 70 controls the wavelength-selecting action of the spectral filter 52 and the imaging action of the imaging unit 40 to be synchronized with each other. That is, the control unit 70 causes the imaging unit 40 to acquire an image of the object 90 formed by the image-forming optical system 30, while various wavelengths of illuminating light are directed onto the object 90 by the spectral filter 52. As a result, a hyperspectral image of the object 90 can be acquired.

In the second embodiment as well, the sinθ, where θ is the converging angle at which the illumination optical system 20 illuminates the object 90 with illuminating light, is set to a value that does not exceed the numerical aperture of the objective lens 31. This configuration allows a hyperspectral image with high data precision to be acquired.

In the second embodiment as well, preferably, the amount of light emitted onto the object 90 by the illumination optical system 20 during observation of the object 90 is increased relative to that during background measurement, thus correcting the difference in the spectrum of illuminating light between during observation and during background measurement. The illumination optical system 20 preferably emits illuminating light onto the object 90 selectively during the exposure period of the imaging unit 40. Further, preferably, the illumination optical system 20 selectively emits illuminating light onto the object 90 in a wavelength band to which the imaging unit 40 has sensitivity.

### Third Embodiment

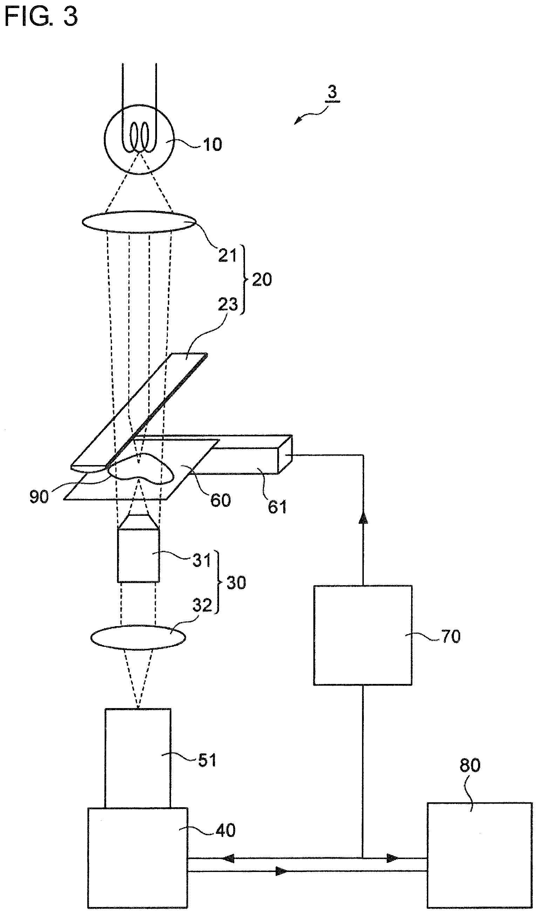

Figure 3 is a conceptual diagram of a microscope 3 according to a third embodiment. The microscope 3 differs from the microscope 1 in the following respects: the microscope 3 is an inverted configuration instead of an upright configuration, and the illumination optical system 20 includes a cylindrical lens 23 instead of the slit 22.

The illumination optical system 20 includes the condenser lens 21 and the cylindrical lens 23. The condenser lens 21 converges the illuminating light output from the light source 10, and directs the illuminating light into the cylindrical lens 23. The cylindrical lens 23 converges the illuminating light reaching the cylindrical lens 23 from the condenser lens 21 with respect to only one direction, and directs the converged illuminating light onto the object 90. This configuration allows the illumination optical system 20 to emit illuminating light onto an area of the object 90 that is elongated in a specific direction.

The control unit 70 controls how the drive unit 61 moves the stage 60, and controls how the imaging unit 40 acquires an image. In particular, the control unit 70 causes the stage 60 to move in a direction perpendicular to both the optical axis of the objective lens 31 and the specific direction mentioned above, and also causes the imaging unit 40 to acquire images at various positions as the stage 60 is moved. As a result, a hyperspectral image of the object 90 can be acquired.

In the third embodiment as well, the sinθ, where θ is the converging angle at which the illumination optical system 20 illuminates the object 90 with illuminating light, is set to a value that does not exceed the numerical aperture of the objective lens 31. This configuration allows a hyperspectral image with high data precision to be acquired.

In the third embodiment as well, preferably, the amount of light emitted onto the object 90 by the illumination optical system 20 during observation of the object 90 is increased relative to that during background measurement, thus correcting the difference in the spectrum of illuminating light between during observation and during background measurement. The illumination optical system 20 preferably emits illuminating light onto the object 90 selectively during the exposure period of the imaging unit 40. Further, preferably, the illumination optical system 20 selectively emits illuminating light onto the object 90 in a wavelength band to which the imaging unit 40 has sensitivity.

The microscope 3 according to the third embodiment has an inverted configuration. That is, the illumination optical system 20 emits illuminating light onto the object 90 from above the object 90, and the objective lens 31 is placed below the object 90. In the case of the upright configuration illustrated in Figures 1 and 2, of the object (cell) 90 and the culture solution, the illuminating light emitted from below enters the object 90 first. By contrast, in the case of the inverted configuration illustrated in Figure 3, of the object 90 and the culture solution, the illuminating light emitted from above enters the culture solution first. Thus, in the case of the inverted configuration, illuminating light illuminates the cell, which is the object 90, after wavelength components hazardous to the culture solution and the cell containing water as a main component are attenuated. This allows for reduced thermal damage to the object 90.

### Fourth Embodiment

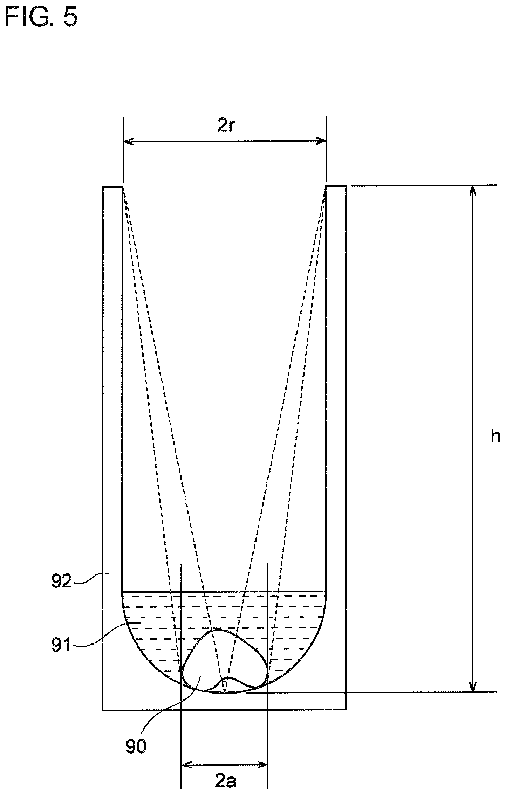

Figure 5 is a conceptual diagram of a container 92 used for observing the object 90 with the object 90 immersed in a culture solution 91. When the object 90 is to be observed with the object 90 held in the container 92 in the case of the inverted configuration described above with reference to the third embodiment, if the converging angle of illuminating light does not exceed β that satisfies the relation: sinβ = r/(r²+h²)^{1/2} where r is the radius of the largest circle that fits inside the top opening of the container 92 and h is the height inside the container 92, this reduces the possibility of mixing-in of the spectra of the side faces of the container 92, thus allowing for improved measurement accuracy. Provided that a specimen size 2a is known, if the converging angle of illuminating light does not exceed γ that satisfies the relation: sinγ =(r-a)/((r-a)²+h²)^{1/2}, this reduces the possibility of mixing-in of the spectra of the side faces of the container 92, thus allowing for improved measurement accuracy.

### Modifications

The present invention is not limited to the embodiments mentioned above but capable of various modifications. Although the first and third embodiments are directed to a case in which wavelength information is directly acquired with respect to the spatial direction, and the second embodiment is directed to a case in which wavelength information is directly acquired with respect to the temporal direction, the present invention may be modified to first obtain an interferogram, which is a Fourier transform of wavelength information, and then perform a Fourier transform to obtain wavelength information.

## Claims

1. A microscope comprising:
a light source configured to output illuminating light in a wavelength band included in a near-infrared region;
an illumination optical system configured to converge the illuminating light at a converging angle θ and to emit the illuminating light onto an observed object;
an image-forming optical system including an objective lens having a numerical aperture equal to or greater than a sine of the converging angle θ, the objective lens being configured to receive transmitted and scattered light generated by the observed object by emission of the illuminating light onto the observed object, and the image-forming optical system being configured to form an image based on the transmitted and scattered light received by the objective lens;
an imaging unit configured to acquire the image;
a spectroscopic unit located between the light source and the imaging unit and configured to disperse the illuminating light or the transmitted and scattered light into a plurality of wavelength components; and
a calculating unit configured, based on the image, to calculate intensities of a plurality of wavelength components of the transmitted and scattered light generated at a plurality of positions in the observed object.

2. A microscope comprising:
a light source configured to output illuminating light in a wavelength band included in a near-infrared region;
an illumination optical system configured to converge the illuminating light and to emit the illuminating light onto an observed object;
an image-forming optical system including an objective lens configured to receive transmitted and scattered light generated by the observed object by emission of the illuminating light onto the observed object, the image-forming optical system having, at a focal position of the objective lens, a width of field of view equal to or greater than a beam diameter of the illuminating light output by the illumination optical system, the image-forming optical system being configured to form an image based on the transmitted and scattered light received by the objective lens;
an imaging unit configured to acquire the image;
a spectroscopic unit located between the light source and the imaging unit and configured to disperse the illuminating light or the transmitted and scattered light into a plurality of wavelength components; and
a calculating unit configured, based on the image, to calculate intensities of a plurality of wavelength components of the transmitted and scattered light generated at a plurality of positions in the observed object.

3. The microscope according to claim 1 or 2,
wherein the illumination optical system emits the illuminating light onto the observed object from above the observed object, and
wherein the objective lens is disposed below the observed object.

4. The microscope according to any one of claims 1 to 3,
wherein the illumination optical system is configured to increase an amount of the illuminating light during observation of the observed object relative to an amount of the illuminating light during background measurement, the illuminating light illuminating the observed object during the observation, and
wherein the calculating unit includes a storage device configured to store correction data used to correct a difference in spectrum of the illuminating light between during observation and during background measurement and to correct the intensities of the wavelength components based on the correction data.

5. The microscope according to any one of claims 1 to 4,
wherein the light source or the illumination optical system is configured to selectively emit the illuminating light onto the observed object during an exposure period of the imaging unit.

6. The microscope according to any one of claims 1 to 5,
wherein the illumination optical system includes a cylindrical lens that converges the illuminating light onto an area of the observed object that is elongated in a specific direction,
wherein the spectroscopic unit is configured to disperse the transmitted and scattered light in a direction perpendicular to the specific direction, and
wherein the imaging unit is configured to acquire intensities of a plurality of wavelength components of the transmitted and scattered light generated at a plurality of positions in the observed object along the specific direction.

7. The microscope according to any one of claims 1 to 5,
wherein the illumination optical system includes a slit to restrict an area of the observed object illuminated with the illuminating light to an area elongated in a specific direction,
wherein the spectroscopic unit is configured to disperse the transmitted and scattered light in a direction perpendicular to the specific direction, and
wherein the imaging unit is configured to acquire intensities of a plurality of wavelength components of the transmitted and scattered light generated at a plurality of positions in the observed object along the specific direction.

8. The microscope according to any one of claims 1 to 7,
wherein the illumination optical system is configured to selectively emit the illuminating light onto the observed object in a wavelength band to which the imaging unit has sensitivity.
